# EUROPEAN PATENT APPLICATION

(11) **EP 4 386 281 A1**
(43) Date of publication of application: **19.06.2024**
(21) Application number: 21953489.8
(22) Date of filing: 12.08.2021
(51) Int. Cl.: F25B 43/00

(54) **REFRIGERANT STORAGE CONTAINER, AND REFRIGERATION CYCLE DEVICE PROVIDED WITH SAID REFRIGERANT STORAGE CONTAINER**

(71) Applicant: MITSUBISHI ELECTRIC CORPORATION, Chiyoda-ku Tokyo 100-8310 (JP)
(72) Inventor: TSUKIYAMA, Ryo, Tokyo 100-8310 (JP)
(74) Representative: Pfenning, Meinig & Partner mbB
(86) International application number: PCT/JP2021/029700
(87) International publication number: WO 2023/017594

(57) **Abstract**

A refrigerant storage container includes: a horizontally oriented container main body that is a sealed cylindrical body and is provided such that its longitudinal direction is a horizontal direction; an inflow pipe which is connected to the main body and through which the two-phase gas-liquid refrigerant flows into the main body; and an outflow pipe which is connected to the main body and through which gas refrigerant and liquid refrigerant flow out from the main body to an outside of the main body. The inflow pipe has an extension part that extends along the longitudinal direction of the main body. The extension part has a discharge hole that is formed along an axial direction of the inflow pipe and that causes an inside of the inflow pipe to communicate with an outside of the inflow pipe, thereby allowing the two-phase gas-liquid refrigerant to flow into the main body.

## Description

### Technical Field

The present disclosure relates to a refrigerant storage container configured to separate two-phase gas-liquid refrigerant into gas refrigerant and liquid refrigerant and to store the liquid refrigerant in the container, and also relates to a refrigeration cycle apparatus provided with the refrigerant storage container.

### Background Art

In the past, various refrigerant storage containers configured to separate two-phase gas-liquid refrigerant into gas refrigerant and liquid refrigerant and to store the liquid refrigerant in the container have been disclosed and have been put to practical use. For example, Patent Literature 1 discloses a refrigerant storage container that includes a container main body, an inflow pipe through which two-phase gas-liquid refrigerant flows into the container main body, and an outflow pipe through which gas refrigerant flows from the container main body to the outside of the container main body. The container main body is a cylindrical body and is horizontally oriented such that its longitudinal direction is parallel to a horizontal direction. The inflow pipe provided in the container main body has a distal end having an angled shape and is configured to reduce the inflow velocity of the two-phase gas-liquid refrigerant which flows into the container main body.

### Citation List

### Patent Literature

Patent Literature 1: Japanese Patent No. 3163312

### Summary of Invention

### Technical Problem

Patent Literature 1 describes a configuration in which the two-phase gas-liquid refrigerant is caused to flow into the container only through the distal end of the inflow pipe provided in the container main body. The two-phase gas-liquid refrigerant which flows out from the distal end of the inflow pipe vigorously strikes against an inner wall surface of the container main body without being dispersed. Then, the two-phase gas-liquid refrigerant flows downward in the container main body, strikes concentratedly against part of the liquid refrigerant stored in lower part of the container main body, and waves the liquid refrigerant, as a result of which a surface of the liquid refrigerant may roll up along the inner wall surface of the container main body. The rolled-up liquid refrigerant or flying droplets may reach the outflow pipe and enter along with gas refrigerant a compressor. If the liquid refrigerant excessively flows out from the container and flows together with the gas refrigerant into the compressor, refrigerating machine oil in a shell of the compressor may be diluted with the liquid refrigerant, causing seizure at sliding parts of the compressor.

The present disclosure is applied to solve the above problem, and relates to a refrigerant storage container that is horizontally oriented, causes liquid refrigerant separated from gas refrigerant to be efficiently stored in the container, and reduces an outflow of the stored liquid refrigerant to prevent dilution of refrigerating machine oil that would be caused by the flow of the liquid refrigerant which flows together with the gas refrigerant into a compressor, and ensure the reliability of the compressor, and also relates to a refrigeration cycle apparatus including the refrigerant storage container. Solution to Problem

A refrigerant storage container according to an embodiment of the present disclosure separates two-phase gas-liquid refrigerant into gas refrigerant and liquid refrigerant, and stores the liquid refrigerant in the refrigerant storage container. The refrigerant storage container includes: a horizontally oriented container main body that is a sealed cylindrical body and is provided such that a longitudinal direction of the container main body is a horizontal direction; an inflow pipe which is connected to the container main body and through which the two-phase gas-liquid refrigerant flows into the container main body; and an outflow pipe which is connected to the container main body and through which gas refrigerant and liquid refrigerant flow out from the container main body to an outside of the container main body. The inflow pipe has an extension part that extends in the longitudinal direction of the container main body. The extension part has a discharge hole that is formed along an axial direction of the inflow pipe and that causes an inside of the inflow pipe to communicate with an outside of the inflow pipe, thereby allowing the two-phase gas-liquid refrigerant to flow into the container main body.

A refrigeration cycle apparatus according to another embodiment of the present disclosure includes the above refrigerant storage container and a compressor that is connected to the refrigerant storage container by the outflow pipe.

### Advantageous Effects of Invention

According to the embodiments of the present disclosure, the extension part extending in the longitudinal direction of the container main body includes the discharge hole or discharge holes which are formed along the axial direction of the inflow pipe and which cause the inside of the inflow pipe to communicate with the outside of the inflow pipe, thereby allowing the two-phase gas-liquid refrigerant to flow into the container main body. Thus, it is possible to cause the two-phase gas-liquid refrigerant to flow from the discharge hole or holes into the container main body while being dispersed from the discharge hole or holes. By virtue of this configuration, it is possible to reduce the velocity of the two-phase gas-liquid refrigerant which strikes against an inner wall surface of the container main body, thereby reducing the degree to which the stored liquid refrigerant is rolled up and thus reducing an outflow of the liquid refrigerant from the outflow pipe. Therefore, since an excessive outflow of the stored liquid refrigerant can be reduced, it is possible to prevent dilution of refrigerating machine oil that would be caused by flow of the liquid refrigerant into the compressor, thus ensuring the reliability of the compressor.

### Brief Description of Drawings

[Fig. 1] Fig. 1 is a refrigerant circuit diagram of a refrigeration cycle apparatus including a refrigerant storage container according to Embodiment 1.
[Fig. 2] Fig. 2 is a front view of an internal configuration of the refrigerant storage container according to Embodiment 1.
[Fig. 3] Fig. 3 is a plan view of the internal configuration of the refrigerant storage container according to Embodiment 1 as viewed from above.
[Fig. 4] Fig. 4 is a diagram of the internal configuration of the refrigerant storage container as viewed in a direction A in Fig. 2.
[Fig. 5] Fig. 5 is a front view of an internal configuration of a first modification of the refrigerant storage container according to Embodiment 1.
[Fig. 6] Fig. 6 is a front view of an internal configuration of a second modification of the refrigerant storage container according to Embodiment 1.
[Fig. 7] Fig. 7 is a front view of an internal configuration of an existing refrigerant storage container.
[Fig. 8] Fig. 8 illustrates the internal configuration of the refrigerant storage container as viewed in a direction B in Fig. 7.
[Fig. 9] Fig. 9 is an explanatory view illustrating the refrigerant storage container according to Embodiment 1 and that is used in explanation of how two-phase gas-liquid refrigerant flows from discharge holes.
[Fig. 10] Fig. 10 is a front view of an internal configuration of a refrigerant storage container according to Embodiment 2.
[Fig. 11] Fig. 11 is a front view of an internal configuration of a refrigerant storage container according to Embodiment 3.
[Fig. 12] Fig. 12 is a front view of an internal configuration of a modification of the refrigerant storage container according to Embodiment 3.
[Fig. 13] Fig. 13 is a front view of an internal configuration of a refrigerant storage container according to Embodiment 4.
[Fig. 14] Fig. 14 is a front view of an internal configuration of a modification of the refrigerant storage container according to Embodiment 4.

### Description of Embodiments

Embodiments of the present disclosure will be described below with reference to the figures in the drawings. It should be noted that in each of the figures, components that are the same as or equivalent to those in a previous figure or previous figures are denoted by the same reference signs, and their descriptions will thus be omitted or simplified as appropriate. Furthermore, for example, the shapes, sizes, and arrangement of components as illustrated in each figure can be changed as appropriate.

### Embodiment 1

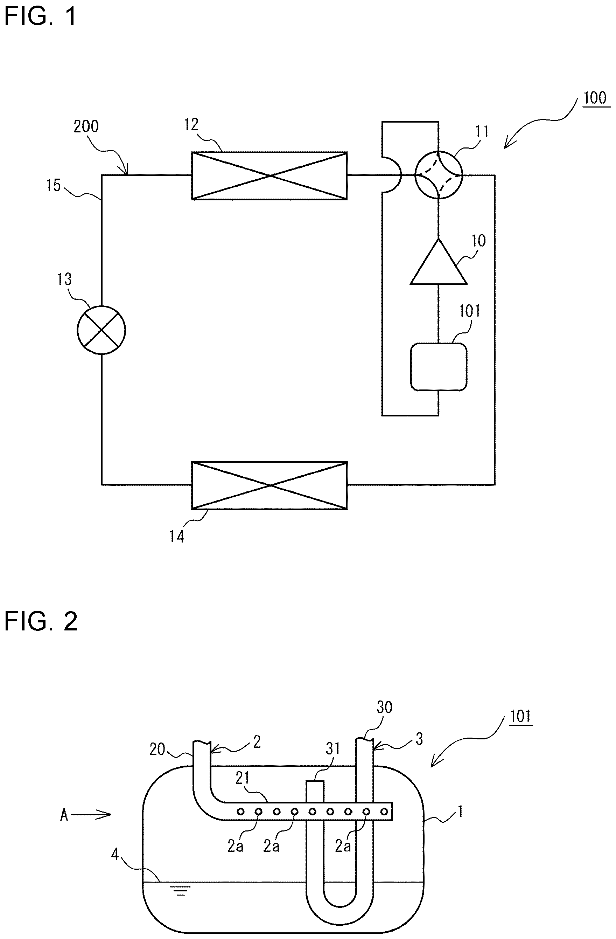

First of all, a refrigeration cycle apparatus 100 including a refrigerant storage container 101 according to Embodiment 1 will be described with reference to Fig. 1. Fig. 1 is a refrigerant circuit diagram of the refrigeration cycle apparatus 100 including the refrigerant storage container 101 according to Embodiment 1.

As illustrated in Fig. 1, the refrigeration cycle apparatus 100 according to Embodiment 1 includes a refrigerant circuit 200 in which a compressor 10, a flow switching device 11, an outdoor heat exchanger 12, an expansion mechanism 13, an indoor heat exchanger 14, and the refrigerant storage container 101 are sequentially connected by refrigerant pipes 15 and in which refrigerant is circulated.

The compressor 10 sucks the refrigerant, compresses the sucked refrigerant to change it into high-temperature and high-pressure refrigerant, and discharges the high-temperature and high-pressure refrigerant. The compressor 10 is, for example, an inverter compressor. The refrigerant discharged from the compressor 10 flows into the outdoor heat exchanger 12 or the indoor heat exchanger 14.

The flow switching device 11 is, for example, a four-way valve, and has a function of switching a refrigerant passage to be used, between refrigerant passages. In a cooling operation, the flow switching device 11 switches the refrigerant passage such that a refrigerant discharge side of the compressor 10 is connected to a gas side of the outdoor heat exchanger 12 and a refrigerant suction side of the compressor 10 is connected to a gas side of the indoor heat exchanger 14. In a heating operation, the flow switching device 11 switches the flow passage such that the refrigerant discharge side of the compressor 10 is connected to the gas side of the indoor heat exchanger 14 and the refrigerant suction side of the compressor 10 is connected to the gas side of the outdoor heat exchanger 12. It should be noted that the flow switching device 11 may be a combination of two-way valves or three-way valves.

In the cooling operation, the outdoor heat exchanger 12 operates as a condenser and causes heat exchange to be performed between refrigerant discharged from the compressor 10 and air. In the heating operation, the outdoor heat exchanger 12 operates as an evaporator and causes heat exchange to be performed between refrigerant which flows out from the expansion mechanism 13 and air. The outdoor heat exchanger 12 takes in outdoor air sent by a fan, and lets out air subjected to heat exchange with the refrigerant to the outside of the outdoor heat exchanger 12.

The expansion mechanism 13 reduces the pressure of refrigerant that flows in the refrigerant circuit to expand the refrigerant, and is, for example, an electronic expansion valve whose opening degree is variably controlled.

In the cooling operation, the indoor heat exchanger 14 operates as an evaporator and causes heat exchange to be performed between refrigerant which flows out from the expansion mechanism 13 and air. In the heating operation, the indoor heat exchanger 14 operates as a condenser and causes heat exchange to be performed between refrigerant discharged from the compressor 10 and air. The indoor heat exchanger 14 takes in indoor air sent by a fan, and supplies air subjected to heat exchange with the refrigerant to an indoor space.

As illustrated in Fig. 1, the refrigerant storage container 101 is provided upstream of a suction port of the compressor 10. The refrigerant storage container 101 separates two-phase gas-liquid refrigerant which flows out from the evaporator, into gas refrigerant and liquid refrigerant 4, and stores the liquid refrigerant 4 in a lower space in the container. In the refrigeration cycle apparatus 100, ideally, refrigerant to be sucked into the compressor 10 is a superheated gas. However, the refrigeration cycle apparatus 100 depends on a refrigerant distribution in the circuit, and gas refrigerant containing the liquid refrigerant 4 may be sucked into the compressor 10. If the liquid refrigerant 4 is sucked into the compressor 10, refrigerating machine oil in a shell of the compressor 10 may be diluted with the liquid refrigerant 4, causing seizure at sliding parts of the compressor 10. Thus, in order to avoid occurrence of seizure at the sliding parts of the compressor 10 in the refrigeration cycle apparatus 100, the refrigerant storage container 101 which stores the liquid refrigerant 4 separated from the gas refrigerant is provided upstream of the suction port of the compressor 10.

The cooling operation of the refrigeration cycle apparatus 100 will be described. High-temperature and high-pressure gas refrigerant discharged from the compressor 10 passes through the flow switching device 11, flows to the outdoor heat exchanger 12, and exchanges heat with air to condense and liquefy. The refrigerant that has condensed and liquefied is reduced in pressure by the expansion mechanism 13 to change into low-pressure two-phase gas-liquid refrigerant. The refrigerant then flows to the indoor heat exchanger 14, and exchanges heat with air to gasify. The refrigerant that has gasified passes through the flow switching device 11 and is sucked into the compressor 10 via the refrigerant storage container 101.

The heating operation of the refrigeration cycle apparatus 100 will be described. High-temperature and high-pressure gas refrigerant discharged from the compressor 10 passes through the flow switching device 11, flows to the indoor heat exchanger 14, and exchanges heat with air to condense and liquefy. The refrigerant that has condensed and liquefied is reduced in pressure by the expansion mechanism 13 to change into low-pressure two-phase gas-liquid refrigerant. The refrigerant then flows to the outdoor heat exchanger 12 and exchanges heat with air to gasify. The refrigerant that has gasified passes through the flow switching device 11 and is sucked into the compressor 10 via the refrigerant storage container 101.

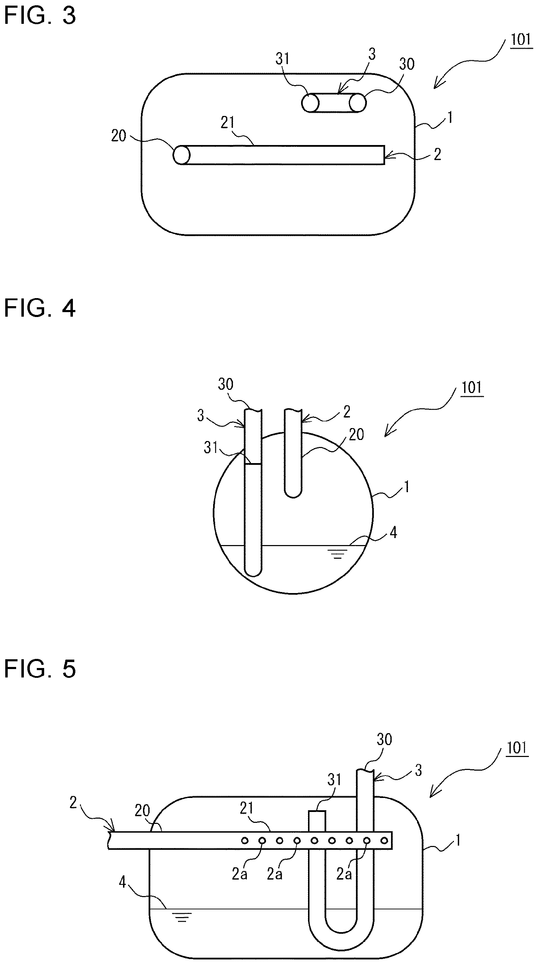

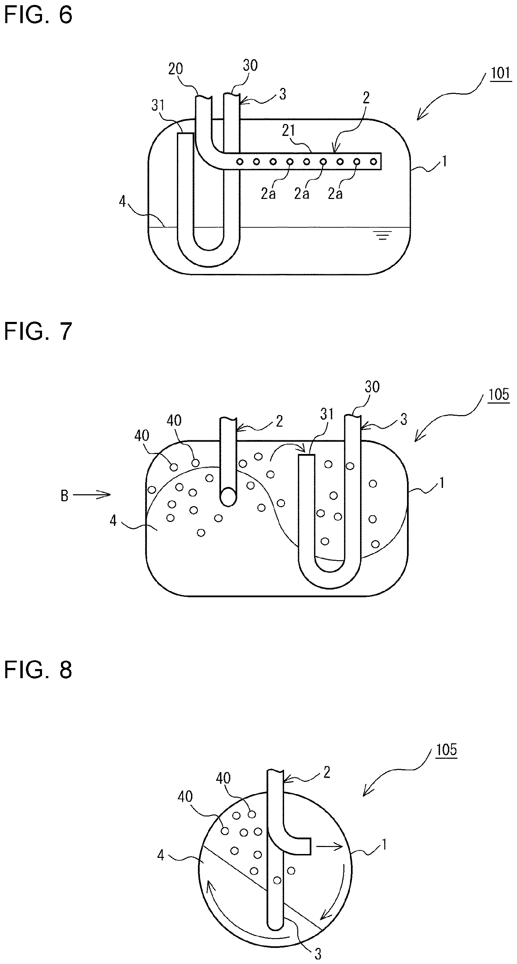

Next, the refrigerant storage container 101 according to Embodiment 1 will be described with reference to Figs. 2 to 6. Fig. 2 is a front view of an internal configuration of the refrigerant storage container 101 according to Embodiment 1. Fig. 3 is a plan view of the internal configuration of the refrigerant storage container 101 according to Embodiment 1. Fig. 4 illustrates the internal configuration of the refrigerant storage container 101 as viewed in a direction A in Fig. 2. Fig. 5 is a front view of an internal configuration of a first modification of the refrigerant storage container 101 according to Embodiment 1. Fig. 6 is a front view of an internal configuration of a second modification of the refrigerant storage container 101 according to Embodiment 1.

As illustrated in Figs. 2 to 4, the refrigerant storage container 101 according to Embodiment 1 includes a container main body 1, an inflow pipe 2, and an outflow pipe 3. The container main body 1 forms an outer casing of the refrigerant storage container 101. The container main body 1 is a sealed cylindrical body and is horizontally oriented such that its longitudinal direction is parallel to a horizontal direction. Two-phase gas-liquid refrigerant that flows out from the evaporator flows into the container main body 1 through the inflow pipe 2. The two-phase gas-liquid refrigerant contains the refrigerating machine oil.

As illustrated in Fig. 2, the inflow pipe 2 is provided to cause the two-phase gas-liquid refrigerant that flows out from the evaporator to flow into the container main body 1. In an example illustrated in Fig. 2, the inflow pipe 2 is L-shaped in the container main body 1, and has an inlet part 20 connected to an upper side of the container main body 1 and an extension part 21 that extends along the longitudinal direction of the container main body 1 in the horizontal direction. An end face of the extension part 21 is closed. It is not indispensable that the extension part 21 extends horizontally. For example, the extension part 21 may be slightly inclined in an up-down direction. In addition, it is not indispensable that the end face of the extension part 21 is completely closed. The end face of the extension part 21 may have an opening through which the two-phase gas-liquid refrigerant flows into the container main body 1.

In the extension part 21, discharge holes 2a are formed and arranged along an axial direction of the extension part 21. The discharge holes 2a each cause the inside of the inflow pipe 2 to communicate with the outside of the inflow pipe 2, and each allow the two-phase gas-liquid refrigerant to flow into the container main body 1. In Embodiment 1, the discharge holes 2a are arranged at regular intervals along the axial direction. The discharge holes 2a face an inner wall surface of the container main body 1 in the horizontal direction. The discharge holes 2a are located in both side surfaces of the extension part 21 that are located opposite to each other. The discharge holes 2a have, for example, a circular shape.

In the case where the end face of the extension part 21 is closed, it is preferable that the total area of the discharge holes 2a be larger than or equal to a passage cross-sectional area of the inflow pipe 2. This is because in the case where the total area of the discharge holes 2a is larger than or equal to the passage cross-sectional area, it is possible to reduce the velocity of two-phase gas-liquid refrigerant that flows out from the discharge holes 2a.

The discharge holes 2a may be formed in only one side surface of the extension part 21. Each of the discharge holes 2a may have, for example, an elliptical shape, an oval shape, or a rectangular shape, or may be formed in the shape of a spiral along the axial direction, or may have any other shape. The arrangement and size of the discharge holes 2a are appropriately changed depending on, for example, the size of the container main body 1 or the size, shape, and length of the inflow pipe 2. For example, the discharge holes 2a formed in the both side surfaces of the extension part 21 may be arranged in a staggered manner such that any associated ones of the discharge holes 2a that are located opposite to each other are not aligned with each other.

Although it is described above that the discharge holes 2a are provided only in the extension part 21, it is not limiting. The discharge holes 2a may be formed in the inlet part 20 or in the bent part which connects the extension part 21 and the inlet part 20. Furthermore, although it is preferable that the discharge holes 2a be formed to face the inner wall surface of the container main body 1 in the horizontal direction, the discharge holes 2a may be formed to face upward, downward, or obliquely in the container main body 1, for example. In addition, it is described above that the inflow pipe 2 is connected to the upper surface of the container main body 1, but it is not limiting. As illustrated in Fig. 5, the inflow pipe 2 may be a straight pipe, and the inlet part 20 may be connected to a side surface of the container main body 1 in the horizontal direction. Although it is not illustrated, the inlet part 20 may be connected to a lower surface of the container main body 1.

As illustrated in Figs. 2 to 4, the outflow pipe 3 is provided to cause the gas refrigerant and the liquid refrigerant 4 to flow from the container main body 1 to the outside of the container main body 1. In the example illustrated in Fig. 2, the outflow pipe 3 is U-shaped in the container main body 1 and has one end 30 connected to the upper surface of the container main body 1. Of the two-phase gas-liquid refrigerant, the gas refrigerant separated from the liquid refrigerant 4 flows into the outflow pipe 3 through the other end 31 of the outflow pipe 3, flows to the outside of the container main body 1, and is then sucked into the compressor 10. The other end 31 of the outflow pipe 3 is provided at a higher position than the extension part 21 of the inflow pipe 2. This configuration is intended to reduce the probability that the liquid refrigerant 4 of the two-phase gas-liquid refrigerant which flows out from the discharge holes 2a will flow into the outflow pipe 3 through the other end 31 of the outflow pipe 3.

Although it is described above that the outflow pipe 3 is connected to the upper surface of the container main body 1, it is not limiting. Although it is not illustrated, the outflow pipe 3 may be L-shaped in the container main body 1. The one end 30 of the outflow pipe 3 may be connected to a side surface of the container main body 1 in the horizontal direction or may be connected to the lower surface of the container main body 1.

As illustrated in Fig. 6, the other end 31 of the outflow pipe 3 may be provided upstream of the most upstream one of the discharge holes 2a. A large number of droplets of the two-phase gas-liquid refrigerant are made by inertial force to flow out from part of the inflow pipe 2 that is located on a downstream side. Thus, by providing the other end 31 of the outflow pipe 3 upstream of the most upstream discharge hole 2a and away from the downstream side of the inflow pipe 2, it is possible to reduce the flow of droplets into the outflow pipe 3. Such a configuration is effective particularly in the case where the end face of the extension part 21 has an opening through which the two-phase gas-liquid refrigerant flows into the container main body 1.

In the refrigerant storage container 101 having the above configuration, the two-phase gas-liquid refrigerant flows into the container main body 1 through the inflow pipe 2. The two-phase gas-liquid refrigerant which flows through the inflow pipe 2 flows into the container main body 1 through the discharge holes 2a provided in the inflow pipe 2. The two-phase gas-liquid refrigerant which has flowed through the discharge holes 2a strikes against the inner wall surface of the container main body 1 and is thus separated into gas refrigerant and liquid refrigerant 4. The gas refrigerant, which has a low density, stays in an upper space in the container main body 1, flows to the outside of the container main body 1 through the other end 31 of the outflow pipe 3, and is then sucked into the compressor 10. The liquid refrigerant 4, which has a high density, flows to and is stored in the lower space in the container main body 1 under the effect of gravity.

Fig. 7 is a front view of an internal configuration of an existing refrigerant storage container 105. Fig. 8 illustrates the internal configuration of the refrigerant storage container 105 as viewed in a direction B in Fig. 7. In Fig. 8, arrows indicate the flow direction of refrigerant that flows out from the end of the inflow pipe 2. As illustrated in Figs. 7 and 8, the existing refrigerant storage container 105 has a configuration in which two-phase gas-liquid refrigerant flows into the container main body 1 only through the end of the inflow pipe 2 provided in the container main body 1. Thus, in the refrigerant storage container 105, the two-phase gas-liquid refrigerant which has flowed out from the end of the inflow pipe 2 vigorously strikes against the inner wall surface of the container main body 1 without being dispersed. The two-phase gas-liquid refrigerant which has struck against the inner wall surface flows downward in the container main body 1, and strikes concentratedly against part of the liquid refrigerant 4 stored in the lower space in the container main body 1. Thus, the liquid refrigerant 4 waves as it turns up and down, such that the surface of the liquid refrigerant rolls up along the inner wall surface of the container main body 1. The rolled-up liquid refrigerant 4 or flying droplets 40 may reach the other end 31 of the outflow pipe 3 and flows together with the gas refrigerant into the compressor 10. If the liquid refrigerant 4 excessively flows out of the container and flows together with the gas refrigerant into the compressor 10, the refrigerating machine oil in the shell of the compressor 10 may be diluted with the liquid refrigerant, causing seizure to occur at the sliding parts of the compressor 10.

In view of the above, as described above, the refrigerant storage container 101 according to Embodiment 1 includes: the horizontally oriented container main body 1, which is a sealed cylindrical body and is provided such that its longitudinal direction parallel to the horizontal direction; the inflow pipe 2 which is connected to the container main body 1 and through which the two-phase gas-liquid refrigerant flows into the container main body 1; and the outflow pipe 3 which is connected to the container main body 1 and through which the gas refrigerant and the liquid refrigerant 4 flow from the container main body 1 to the outside of the container main body 1. The inflow pipe 2 has the extension part 21 which extends along the longitudinal direction of the container main body 1. In the extension part 21, the discharge holes 2a are formed and arranged along the axial direction. The discharge holes 2a cause the inside of the inflow pipe 2 to communicate with the outside of the inflow pipe 2, and allow the two-phase gas-liquid refrigerant to flow into the container main body 1.

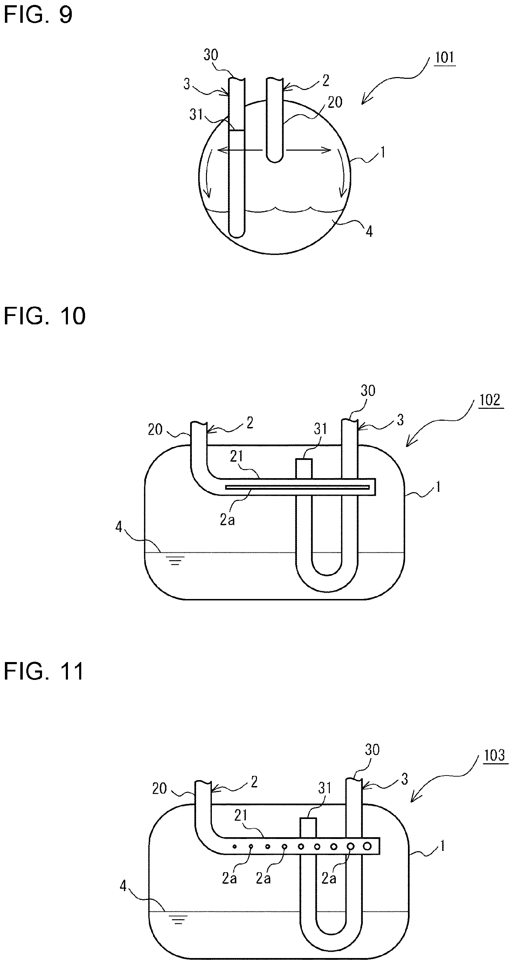

Fig. 9 is an explanatory view that illustrates the refrigerant storage container 101 according to Embodiment 1 and that is used in explanation of how the two-phase gas-liquid refrigerant flows out from the discharge holes 2a. In Fig. 9, arrow indicates the flow direction of the refrigerant which has flowed out from the discharge holes 2a. As illustrated in Fig. 9, in the refrigerant storage container 101 according to Embodiment 1, the two-phase gas-liquid refrigerant can be caused to flow out from the discharge holes 2a formed in the inflow pipe 2, while being dispersed. As a result, it is possible to reduce the velocity of the two-phase gas-liquid refrigerant which strikes against the inner wall surface of the container main body 1, thus reducing the degree to which the stored liquid refrigerant 4 is rolled up, and reducing an outflow of the liquid refrigerant 4 from the outflow pipe 3. It is therefore possible to prevent excessive outflow of the stored liquid refrigerant 4, and thus to prevent dilution of the refrigerating machine oil that would be caused by flow of the liquid refrigerant 4 into the compressor 10, thus ensuring the reliability of the compressor 10.

The discharge holes 2a face the inner wall surface of the container main body 1 in the horizontal direction. By virtue of this configuration, it is possible to guide the liquid refrigerant downward along the inner wall surface of the container main body 1 after causing the two-phase gas-liquid refrigerant to strike against the inner wall surface of the container main body 1. It is therefore possible to reduce occurrence of flying of droplets of the stored liquid refrigerant 4.

The discharge holes 2a are formed in the both side surfaces of the inflow pipe 2 which are located opposite to each other. Thus, the two-phase gas-liquid refrigerant that flows out from the discharge holes 2a can be dispersed and made to strike against the liquid refrigerant 4 stored in the lower space in the container main body 1. It is therefore possible to reduce occurrence of waving of the liquid refrigerant 4 that occurs such that the liquid refrigerant 4 rotates in the up-down direction.

The discharge holes 2a are spaced apart from each other along the axial direction. It is therefore possible to cause the two-phase gas-liquid refrigerant to flow out from the discharge holes 2a formed in the inflow pipe 2, while being dispersed, and to reduce the velocity of the two-phase gas-liquid refrigerant which strikes against the inner wall surface of the container main body 1.

In the inflow pipe 2, the end face of the extension part 21 is closed in the container main body 1. It is therefore possible to cause the two-phase gas-liquid refrigerant to flow from the discharge holes 2a located in the inflow pipe 2, while being efficiently dispersed. In this case, it is effective that the total area of the discharge holes 2a be larger than or equal to the passage cross-sectional area of the inflow pipe 2. This is because in such a configuration, it is possible to reduce the velocity of the two-phase gas-liquid refrigerant which flows out from the discharge holes 2a.

The end 31 of the outflow pipe 3, through which the gas refrigerant flows thereinto, is provided upstream of the most upstream one of the discharge holes 2a. A large number of droplets of the two-phase gas-liquid refrigerant can be caused by inertial force to flow out from a downstream side of the inflow pipe 2. Since the other end 31 of the outflow pipe 3, through which the gas refrigerant enters, is provided upstream of the most upstream discharge hole 2a and away from the downstream side of the inflow pipe 2, the flow of droplets into the outflow pipe 3 can be reduced.

### Embodiment 2

A refrigerant storage container 102 according to Embodiment 2 will be described with reference to Fig. 10. Fig. 10 is a front view of an internal configuration of the refrigerant storage container 102 according to Embodiment 2. Regarding Embodiment 2, components that are the same as those in in Embodiment 1 will be denoted by the same reference signs, and their descriptions will thus be omitted as appropriate.

The refrigerant storage container 102 according to Embodiment 2 differs from the refrigerant storage container 101 according to Embodiment 1 in the configuration of the discharge holes 2a provided in the extension part 21. The other components in Embodiment 2 are the same as those in Embodiment 1.

As illustrated in Fig. 10, the discharge holes 2a provided in the extension part 21 in Embodiment 2 are slits that extend in the axial direction. The discharge holes 2a face the inner wall surface of the container main body 1 in the horizontal direction. The discharge holes 2a are located in both side surfaces of the extension part 21 that are located opposite to each other. In the case where the end face of the extension part 21 is closed, it is preferable that the total area of the discharge holes 2a be larger than or equal to the passage cross-sectional area of the inflow pipe 2. By forming the discharge holes 2a such that the total area of the discharge holes 2a is larger than or equal to the passage cross-sectional area, it is possible to reduce the velocity of two-phase gas-liquid refrigerant that flows out from the discharge holes 2a. The configuration of the discharge holes 2a is not limited to that of the above example in which a single discharge hole 2a is formed in each of the side surfaces along the axial direction, a plurality of discharge holes 2a may be formed in each of the side surfaces such that they are spaced apart from each other along the axial direction.

It is described above that the discharge holes 2a are provided only in the extension part 21, but it is not limiting. The discharge holes 2a may be provided in the inlet part 20 or in the bent part which connects the extension part 21 and the inlet part 20. In addition, although it is preferable that the discharge holes 2a face the inner wall surface of the container main body 1 in the horizontal direction, the discharge holes 2a may be formed to face upward, downward, or obliquely in the container main body 1, for example.

As described above, the refrigerant storage container 102 according to Embodiment 2 also enables the two-phase gas-liquid refrigerant to flow into the container main body 1 while being dispersed from the discharge holes 2a formed in the inflow pipe 2. Thus, it is possible to reduce the velocity of the two-phase gas-liquid refrigerant which strikes against the inner wall surface of the container main body 1, thereby reducing the degree to which the stored liquid refrigerant 4 is rolled up and thus reduce an outflow of the liquid refrigerant 4 from the outflow pipe 3. Therefore, since an excessive outflow of the stored liquid refrigerant 4 can be prevented, it is possible prevent dilution of the refrigerating machine oil that would be caused by flow of the liquid refrigerant 4 into the compressor 10, thus ensuring the reliability of the compressor 10.

### Embodiment 3

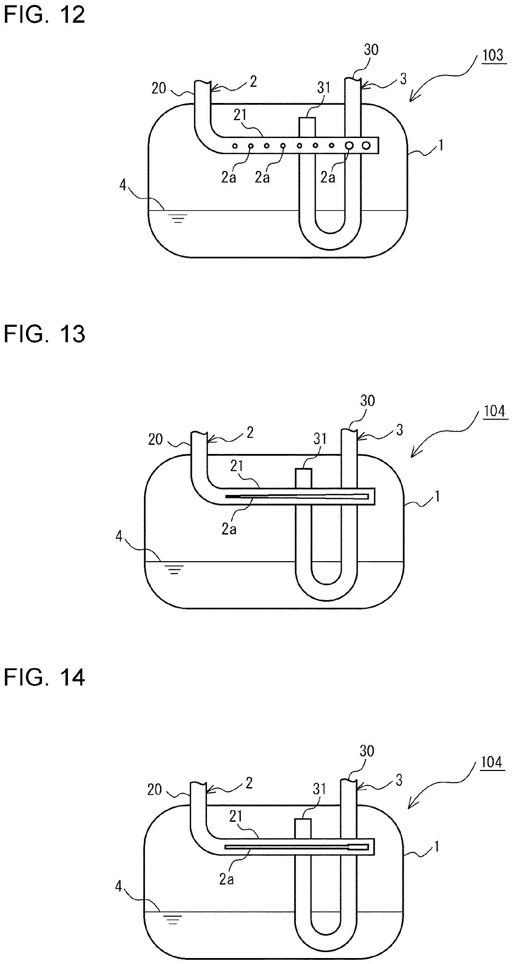

A refrigerant storage container 103 according to Embodiment 3 will be described with reference to Figs. 11 and 12. Fig. 11 is a front view of an internal configuration of the refrigerant storage container 103 according to Embodiment 3. Fig. 12 is a front view of an internal configuration of a modification of the refrigerant storage container 103 according to Embodiment 3. It should be noted that regarding Embodiment 3, components that are the same as those in Embodiment 1 are denoted by the same reference signs, and their descriptions will thus be omitted as appropriate.

The refrigerant storage container 103 according to Embodiment 3 differs from the refrigerant storage container 101 according to Embodiment 1 in the discharge holes 2a located in the extension part 21. In Embodiment 3, the other components are the same as those in Embodiment 1.

In Embodiment 3, as illustrated in Fig. 11, a plurality of discharge holes 2a are formed in the extension part 21 at regular intervals in the axial direction. The discharge holes 2a are formed to have different sizes such that the size of the discharge hole 2a increases in a stepwise manner toward the downstream side of the inflow pipe 2. The more upstream the refrigerant that flows from the discharge hole 2a, the higher the velocity of the refrigerant. If the discharge holes 2a have the same size, the velocities of the refrigerant that flows from the discharge holes 2a may vary, and this may cause the surface of liquid refrigerant to be rolled up. In view of this, in Embodiment 3, the discharge holes 2a are formed to have different sizes such that the size of the discharge hole 2a increases in a stepwise manner toward the downstream side of the inflow pipe 2 in order to equalize the velocities of the refrigerant which flows from the discharge holes 2a.

The discharge holes 2a face the inner wall surface of the container main body 1 in the horizontal direction. The discharge holes 2a are located in each of the both side surfaces of the extension part 21 which are located opposite to each other. In the case where the end face of the extension part 21 is closed, it is preferable that the total area of the discharge holes 2a be larger than or equal to the passage cross-sectional area of the inflow pipe 2. This is because by forming the discharge holes 2a such that the total area of the discharge holes 2a be larger than or equal to the passage cross-sectional area, it is possible to reduce the velocities of the two-phase gas-liquid refrigerant that flows from the discharge holes 2a. The discharge holes 2a have, for example, a circular shape. It should be noted that each of the discharge holes 2a may have, for example, an elliptical shape, an oval shape, or a rectangular shape, or may be formed in the shape of a spiral extending along the axial direction. The arrangement and size of the discharge holes 2a may be appropriately changed depending on, for example, the size of the container main body 1 or the size, shape, and length of the inflow pipe 2. For example, the discharge holes 2a formed in the both side surfaces of the extension part 21 which are located opposite to each other may be formed in a staggered manner such that any associated ones of the discharge holes 2a that are located opposite to each other are not aligned with each other.

Although it is described above that the plurality of discharge holes 2a are formed to have different sizes such that the size of the discharge hole 2a increases in a stepwise manner, it is not limiting. As illustrated in Fig. 12, for example, discharge holes 2a on the downstream side of the inflow pipe 2 may be formed to have a larger size than discharge holes 2a on the upstream side of the inflow pipe 2. Fig. 12 illustrates by way of example a configuration in which two discharge holes 2a located on the downstream side are larger in size than the other discharge holes 2a, that is, than discharge holes located on the upstream side. Although it is not illustrated, the discharge holes 2a may be paired such that a plurality of pairs of discharge holes 2a are formed to have different sizes, discharge holes 2a of each pair have the same size, and the hole size of the pair increases in dimension in a stepwise manner.

Furthermore, it is described above that the discharge holes 2a are located only in the extension part 21, but it is not limiting. The discharge holes 2a may be formed in the inlet part 20 or may be formed in the bent part which connects the extension part 21 and the inlet part 20. Although it is preferable that the discharge holes 2a face the inner wall surface of the container main body 1 in the horizontal direction, the discharge holes 2a may be formed to face upward, downward, or obliquely in the container main body 1, for example.

As described above, the refrigerant storage container 103 according to Embodiment 3 also enables the two-phase gas-liquid refrigerant to flow into the container main body 1 while being dispersed from the discharge holes 2a located in the inflow pipe 2. Thus, it is possible to reduce the velocity of the two-phase gas-liquid refrigerant which strikes against the inner wall surface of the container main body 1, thereby reducing the degree to which the stored liquid refrigerant 4 is rolled up and thus reducing an outflow of the liquid refrigerant 4 from the outflow pipe 3. Therefore, since an excessive outflow of the stored liquid refrigerant 4 can be prevented, it is possible to prevent dilution of the refrigerating machine oil that would be caused by flow of the liquid refrigerant 4 into the compressor 10, thus ensuring the reliability of the compressor 10.

The discharge holes 2a are formed to have different sizes such that the size of the discharge hole 2a increases in dimension in a stepwise manner toward the downstream side of the inflow pipe 2. Alternatively, discharge holes 2a on the downstream side of the inflow pipe 2 are formed to have a larger size than discharge holes 2a on the upstream side of the inflow pipe 2. Therefore, the refrigerant storage container 103 according to Embodiment 3 can equalize the velocities of the refrigerant which flows out from the discharge holes 2a, and further reduce the degree to which the surface of the liquid refrigerant is rolled up.

### Embodiment 4

A refrigerant storage container 104 according to Embodiment 4 will be described with reference to Figs. 13 and 14. Fig. 13 is a front view of an internal configuration of the refrigerant storage container 104 according to Embodiment 4. Fig. 14 is a front view of an internal configuration of a modification of the refrigerant storage container 104 according to Embodiment 4. It should be noted that regarding Embodiment 4, components that are the same as those in Embodiment 1 will be denoted by the same reference signs, and their descriptions will thus be omitted as appropriate.

The refrigerant storage container 104 according to Embodiment 4 differs from the refrigerant storage container 101 according to Embodiment 1 in the discharge holes 2a formed in the extension part 21. In Embodiment 4, the other components are the same as those in Embodiment 1.

In Embodiment 4, each of the discharge holes 2a formed in the extension part 21 is a slit that extends in the axial direction. Each discharge hole 2a increases in dimension in a stepwise manner toward the downstream side of the inflow pipe 2. The more upstream the refrigerant which flows out from the discharge hole 2a, the higher the velocity of the refrigerant. If the discharge hole 2a has a constant dimension, the velocities of refrigerant that flows out from different parts of the discharge hole 2a may vary and the surface of liquid refrigerant may be rolled up. In view of this point, in Embodiment 4, the discharge hole 2a is formed such that its dimension increases in a stepwise manner toward the downstream side of the inflow pipe 2, in order to equalize the velocities of the refrigerant which flows from the different parts of the discharge hole 2a.

The discharge holes 2a face the inner wall surface of the container main body 1 in the horizontal direction. The discharge holes 2a are formed in both side surfaces of the extension part 21 that are located opposite to each other. In the case where the end face of the extension part 21 is closed, it is preferable that the total area of the discharge holes 2a be larger than or equal to the passage cross-sectional area of the inflow pipe 2. By forming the discharge holes 2a such that the total area of the discharge holes 2a is larger than or equal to the passage cross-sectional area, it is possible to reduce the velocities of the two-phase gas-liquid refrigerant which flows out from the discharge holes 2a.

It is described above that each of the discharge holes 2a increases in dimension in a stepwise manner, but it is not limiting. As illustrated in Fig. 14, the discharge hole 2a may be formed such that part of the discharge hole 2a that is located on the downstream side of the inflow pipe 2 is larger in dimension than part of the discharge hole 2a that is located on the upstream side of the inflow pipe 2.

It is described above that the discharge holes 2a are located only in the extension part 21, but it is not limiting. The discharge holes 2a may be provided in the inlet part 20 or in the bent part which connects the extension part 21 and the inlet part 20. Although it is preferable that the discharge holes 2a be formed to face the inner wall surface of the container main body 1 in the horizontal direction, the discharge holes 2a may be formed to face upward, downward, or obliquely in the container main body 1, for example.

As described above, the refrigerant storage container 104 according to Embodiment 4 also enables the two-phase gas-liquid refrigerant to flow into the container main body 1 while being dispersed from the discharge holes 2a located in the inflow pipe 2. Thus, it is possible to reduce the velocity of the two-phase gas-liquid refrigerant which strikes against the inner wall surface of the container main body 1, thereby reducing the degree to which the stored liquid refrigerant 4 is rolled up and reduce an outflow of the liquid refrigerant 4 from the outflow pipe 3. Therefore, since an excessive outflow of the stored liquid refrigerant 4 can be prevented, it is possible to prevent dilution of the refrigerating machine oil which would be caused by flow of the liquid refrigerant 4 into the compressor 10, thus ensuring the reliability of the compressor 10.

Furthermore, each of the discharge holes 2a increases in dimension in a stepwise manner toward the downstream side of the inflow pipe 2. Alternatively, part of the discharge hole 2a that is located on the downstream side of the inflow pipe 2 is larger in dimension than part of the discharge hole 2a that is located on the upstream side of the inflow pipe 2,. Therefore, the refrigerant storage container 103 according to Embodiment 4 can equalize the velocities of the refrigerant which flows from the different parts of the discharge hole 2a and further reduce the degree to which the surface of the liquid refrigerant is rolled up.

The refrigerant storage containers (101 to 104) and the refrigeration cycle apparatus 100 according to the embodiments are described above. However, the configurations of the refrigerant storage containers and the refrigeration cycle apparatus are not limited to those as described above regarding the above embodiments. For example, the configurations of the refrigerant storage containers (101 to 104) are not limited to those illustrated in the figures, and the refrigerant storage containers may each include another component. Furthermore, the configuration of the refrigeration cycle apparatus 100 is not limited to that illustrated in related ones of the figures, and the refrigeration cycle apparatus 100 may include another component. In short, the refrigerant storage containers (101 to 104) and the refrigeration cycle apparatus 100 encompasses the range of design changes and application variations that are normally made by a person with ordinary skill in the art to the extent that they do not depart from the technical concept thereof.

### Reference Signs List

1: container main body, 2: inflow pipe, 2a: discharge hole, 3: outflow pipe, 4: liquid refrigerant, 10: compressor, 11: flow switching device, 12: outdoor heat exchanger, 13: expansion mechanism, 14: indoor heat exchanger, 15: refrigerant pipe, 20: inlet part, 21: extension part, 30: one end, 31: other end, 40: droplet, 100: refrigeration cycle apparatus, 101, 102, 103, 104, 105: refrigerant storage container, 200: refrigerant circuit

## Claims

1. A refrigerant storage container that separates two-phase gas-liquid refrigerant into gas refrigerant and liquid refrigerant, and stores the liquid refrigerant in the refrigerant storage container, the refrigerant storage container comprising:
a horizontally oriented container main body that is a sealed cylindrical body and is provided such that a longitudinal direction of the container main body is a horizontal direction;
an inflow pipe which is connected to the container main body and through which the two-phase gas-liquid refrigerant flows into the container main body; and
an outflow pipe which is connected to the container main body and through which gas refrigerant and liquid refrigerant flow out from the container main body to an outside of the container main body,
wherein
the inflow pipe has an extension part that extends in the longitudinal direction of the container main body, and
the extension part has a discharge hole that is formed along an axial direction of the inflow pipe and that causes an inside of the inflow pipe to communicate with an outside of the inflow pipe, thereby allowing the two-phase gas-liquid refrigerant to flow into the container main body.

2. The refrigerant storage container of claim 1, wherein the discharge hole is formed to face an inner wall surface of the container main body in the horizontal direction.

3. The refrigerant storage container of claim 2, wherein the discharge holes are formed in respective side surfaces of the inflow pipe that are located opposite to each other.

4. The refrigerant storage container of any one of claims 1 to 3, wherein a plurality of the discharge holes are formed and spaced apart from each other along the axial direction.

5. The refrigerant storage container of any one of claims 1 to 3, wherein the discharge hole is a slit that extends along the axial direction.

6. The refrigerant storage container of any one of claims 1 to 5, wherein part of the discharge hole that is located on a downstream side of the inflow pipe is larger than part of the discharge hole that is located on an upstream side of the inflow pipe.

7. The refrigerant storage container of claim 6, wherein the discharge hole increases in dimension in a stepwise manner toward the downstream side of the inflow pipe.

8. The refrigerant storage container of any one of claims 1 to 7, wherein the inflow pipe has a closed end face that is located in the container main body.

9. The refrigerant storage container of any one of claims 1 to 8, wherein a total area of the discharge hole or discharge holes is larger than or equal to a passage cross-sectional area of the inflow pipe.

10. The refrigerant storage container of any one of claims 1 to 9, wherein the outflow pipe has an end through which the gas refrigerant flows thereinto and which is located upstream of a most upstream part of the discharge hole.

11. A refrigeration cycle apparatus comprising:
the refrigerant storage container of any one of claims 1 to 10; and
a compressor connected to the refrigerant storage container by the outflow pipe.
